# EUROPEAN PATENT APPLICATION

(11) **EP 3 561 741 A1**
(43) Date of publication of application: **30.10.2019**
(21) Application number: 17884988.1
(22) Date of filing: 09.12.2017
(51) Int. Cl.: G06Q 10/00, H04L 12/24, G05B 19/05, G05B 15/02

(54) **METHOD AND APPARATUS FOR OPTIMISED REMOTE MANAGEMENT OF PROGRAMMABLE LOGIC CONTROLLERS**

(30) Priority: 23.12.2016 ES 201631681
(71) Applicant: Machine To Smartphone, S.L.U., 25071 Lleida (ES)
(72) Inventor: PONT ALBIOL, Josep, 25191 Lleida (ES); VÁZQUEZ GALLEGO, Francisco Manuel, 25071 Lleida (ES); CALERO SCANLAN, David, 25191 Lleida (ES); ALONSO ZÁRATE, Jesús, 25191 Lleida (ES)
(74) Representative: Mohammadian, Dario
(86) International application number: PCT/ES2017/070803
(87) International publication number: WO 2018/115549

(57) **Abstract**

Different aspects of the invention implement a mobile application that, once installed on an electronic device with wireless communication, enables the remote management of PLCs, from the installation of a new program, such as the reprogramming of an existing PLC, the testing and monitoring of the PLC, permitting the remote resolution of errors by a specialist. The mobile application can connect to a maintenance computer, enabling to remotely and wirelessly perform complex reprogramming operations of the PLC, or troubleshooting, by a professional technician.

## Description

### TECHNICAL FIELD

The invention relates generally to the field of communications, and in particular, the improvement of the remote management of programmable logic controllers by means of a mobile application.

### BACKGROUND ART

Programmable logic controllers, (hereinafter referred to as PLC), are electronic devices whose primary function is to control automatons, or machines, or robots, or other electronic or mechanical devices. These machines usually carry out repetitive functions, and typical examples are machines in factories, or lifts in buildings, or traffic lights in cities. However, they can also involve machines that do not necessarily perform repetitive movements or functions, but isolated ones.

The PLC, as an electronic digital device, typically comprises at least one programmable memory for the storage of instructions, allowing the implementation of specific functions aimed at controlling machines and processes. It also includes a microprocessor, or CPU (*"central processing unit"*), able to perform both arithmetic functions and logical control functions. It is responsible for executing the programmed sequence of instructions and to manage the communication between the various system elements. The communication with the outside is carried out via the input and output ports. The input ports allow the connection of input devices such as sensors or switches that make it possible to know and determine the state of the inputs, or input signals, of the system. The output ports allow the connection of actuators, such as motors, valves, acoustic or light indicators, among other output devices, which can act on the system to be controlled by the PLC. The communication between these different elements is carried out by means of the internal communication system or communication bus(es). In this way, the various elements that make up the internal PLC architecture share information in order to achieve their objective.

PLCs are typically located in the proximity of the machine, or machines, to be controlled, by a fixed wiring. Before the first commissioning of the machine, in an installation phase, the program instructions are loaded onto the PLC that is going to operate a particular machine. After loading the program, the machine operation phase begins. Namely, the PLC executes the program instructions to control machine operation through the activation/deactivation of output signals, and reading of sensor data arriving by the input signals, and depending on the programmed algorithm, to issue new instructions via other output signals, to monitor or correct machine operation.

Since machines with their corresponding PLC traditionally are not mobile, the PLCs comprised custom designs for those particular machines. As an example, in industrial factories, machines and PLCs were installed and not moved for decades. Therefore, conventional PLCs have custom designs for these situations. In contrast, PLCs are increasingly being installed to control mobile machinery, such as agricultural machinery. These machines are operated using a combination of functions that are executed periodically and functions that are carried out seldom. Because of their mobility, these machines are fit with PLCs to control their operation.

Mobile machines have the disadvantage that they cannot be connected by fixed wiring to a communications network. This communication is necessary not only for downloading new programs or update existing programs, but also for monitoring proper machine operation, and solving potential computer problems. Direct communication with the PLC is increasingly necessary for computer troubleshooting, whether in terms of programming or running problems, when a fault occurs, and the machine is located on site, far away from the plant where the operators or specialists in this type of computer troubleshooting are located. Currently, there are no flexible and economical solutions for these problems.

Therefore, when the machine is mobile, and has no wired connection, the possibility of maintaining constant communication with them is lost. While PLCs can be installed in the mobile machine itself, and therefore continue with their machine management, control and monitoring tasks, the connectivity problem remains, as the PLC also needs to be programmed, to receive program updates, or the installation of new programs, according to the function to be performed by the machine.

There are PLCs with integrated cable routers, which allow the PLCs to communicate with central maintenance computers, which being remotely wired connects to the PLCs to exchange data. These solutions are highly expensive and hardly flexible because they are designed for a single PLC, or a small number of PLCs. On one hand, a router, an Ethernet type for example, has to be installed and configured to the communications network of the PLC. Besides, this router, and the payment of the relevant data bandwidth usage rate, is suboptimal, since they are fixed costs for very specific data exchange events. In addition, for small low-cost machines, it is not profitable carrying out a costly installation, therefore, these machines are left with no communication. However, these machines are nonetheless important and need remote PLC management. Finally, while these PLCs with routers are able to communicate, they remain wired to a local communication network, not allowing their use on mobile machinery.

In similar manner, there are PLCs with integrated HTTP servers that allow a user to have visibility of the basic aspects of the PLC for monitoring its state, for instance whether it is in operation or not. On the other hand, they only allow viewing the basic operation parameters of the PLC. As these solutions are graphical interfaces using the HTTP protocol for displaying this information using a page of a browser, they lack the ability to perform more complex functions.

In order to solve the problem of the fixed wiring that prevents a PLC from having the same functionalities once it is mobile, the use of PLCs comprising a wireless communication module that directly uses the cellular communications network has been proposed. This in principle allows communication with the machine even in the field, as long as there is mobile phone coverage. On the other hand, these systems involve a complex installation, and are therefore costly. On one hand, the SIM card (acronym for *"Subscriber Identity Module"*) of the communications module has to be configured beforehand, so that when connected with the machine in the field, it already has a functional subscription. Since the data line belongs to the owner of the machine, it will not be possible to do any kind of testing on the PLC, because until such time the PLC is installed, and in the field, the SIM card cannot be configured. Hence, this solution lacks flexibility as it does not allow PLC manufacturers to check the operation of the product before selling it.

On the other hand, the use of wireless networks using short-range protocols, such as WiFi or Bluetooth, has been proposed. These allow the wireless communication to a router that acts as an access point to the Internet. The drawback of this proposal is that they have very limited coverage at a maximum distance determined by the access point. In addition, this solution replaces the wired network, but does not offer solutions to the other problems caused by PLC mobility, such as remoteness of the maintenance technician, inability to install programs or reprogram PLCs, or the resolution of problems of a blocked PLC.

All these solutions have in common that they attempt to connect a remote PLC using inflexible integrated modules having a costly installation. Once connected to the external communications network, for example the Internet, this enables viewing the state of the PLC, but there is no solution that will enable carrying out all the stages from the time a new PLC is installed in a machine, until it is fully operational. That is to say, no solution exists that enables the installation of a new program, or updating an existing program, to a PLC from a remote machine, wirelessly, economically and having a simple configuration.

Nor is there the possibility of programming an existing PLC using its own programming language via other means that are not among the limited options offered by the manufacturer itself with its factory-integrated modules. The solutions that allow reprogramming are tailor-made solutions, in which there is no access to the manufacturer's firmware program, but certain visible parameters may by modified by using graphical interfaces by Internet pages. By modifying these parameters, the machine behaviour changes in a very limited manner, but access to the original PLC program is not permitted for modifying it using its own programming language in any way desired by the machine user. Thus, these solutions are turnkey tailor-made solutions and offer the complete system, its installation being slow and costly, and lacking flexibility, limiting the machine user's freedom of operation when reprogramming the PLC.

Therefore, currently, there are no viable solutions for enabling the flexible, open, and economical management of existing PLCs from any manufacturer, remotely and wirelessly. Therefore, the problems described need to be effectively solved.

### SUMMARY

It is an object of the invention to provide solutions to the problems described. In particular, it is an object of the invention to provide a gateway application for allowing the flexible, open, and economical management of existing PLCs from any manufacturer, remotely and wirelessly.

Among other characteristics, the various problems are partially or fully solved by providing a mobile application that, once installed on an electronic device with wireless communication, allows the remote management of PLCs, from the installation of a new program, such as the reprogramming of an existing PLC, the testing and monitoring of the PLC, promoting the remote resolution of errors by a specialist. The mobile application connects to a maintenance computer, enabling to remotely and wirelessly perform complex reprogramming operations of the PLC, or troubleshooting, by a professional technician.

An object of the invention is to provide a remote device on a mobile electronic device for facilitating the remote management of a programmable logic controller, PLC, of at least one machine to be controlled.

Another object of the invention is to provide a method in a remote device of a mobile electronic device for facilitating the remote management of a programmable logic controller, PLC, of at least one machine to be controlled.

An object of the invention is to provide a management apparatus on a maintenance computer for facilitating the remote management of a programmable logic controller, PLC, of at least one machine to be controlled.

An object of the invention is to provide a method in a management apparatus on a maintenance computer for facilitating the remote management of a programmable logic controller, PLC, of at least one machine to be controlled.

Another object of the invention is to provide a system, and corresponding method, for facilitating the remote management of a programmable logic controller, PLC, of at least one machine to be controlled.

Another object of the invention is to provide a computer program comprising instructions, once executed on a processor, for performing the steps of a method in a remote apparatus of a mobile electronic device.

Another object of the invention is to provide a computer program comprising instructions, once executed on a processor, for performing the steps of a method in a management apparatus in a maintenance computer.

Another object of the invention is to provide a computer-readable program comprising instructions, once executed on a processor, for performing the steps of a method in a remote apparatus of a mobile electronic device.

Another object of the invention is to provide a computer-readable program comprising instructions, once executed on a processor, for performing the steps of a method in a management apparatus of a maintenance computer.

The invention provides methods and devices that implement various aspects, embodiments, and characteristics of the invention and which are implemented using a variety of means. By way of example, the means may comprise hardware, software, firmware, or a combination thereof and these techniques may be implemented in any one, or combination of, the various means.

For an implementation in hardware, the various means may comprise processing units that are implemented by using one or more application-specific integrated circuits (ASIC), digital signal processors (DSPS), digital signal processing devices (DSPD), programmable logic devices (PLD), field programmable gate arrays (FPGA), processors, controllers, microcontrollers, micro-processors, or other electronic elements, or combination thereof, designed to perform the function(s) described, or a combination thereof.

For software implementation, the means may comprise modules (e.g., procedures, functions, and so on) that perform the functions described. The program code can be stored in a memory element and be executed by a processor. The memory element can be integrated within the processor or external thereto.

Various aspects, configurations, and embodiments of the invention are described. In particular, the invention provides a procedure, devices, systems, processors, program code, and other devices and elements that implement and embody the various aspects, configurations, and characteristics of the invention as described hereunder.

### BRIEF DESCRIPTION OF THE DRAWINGS

The characteristics and advantages of the invention described in the description will become more apparent from the detailed description together with the drawings in which the same reference numbers identify corresponding elements in the various drawings. Corresponding elements can also be identified using different references.
**FIG. 1** shows a system for facilitating remote PLC management.
**FIG. 2** shows the modules of the gateway application of the system for facilitating PLC management.
**FIG.** 3 shows the remote gateway.
**FIG. 4** shows an aspect of the gateway application comprising a credentials server.
**FIG. 5** shows another aspect of the remote gateway.
**FIG. 6** shows the remote gateway packet routing status.

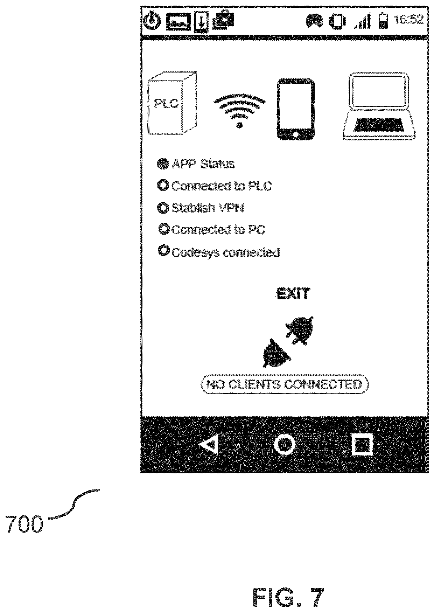

**FIG. 7** shows the remote gateway connections status.
**FIGs. 8A to 8C** show different configurations of PLC memories.

### DETAILED DESCRIPTION OF THE INVENTION

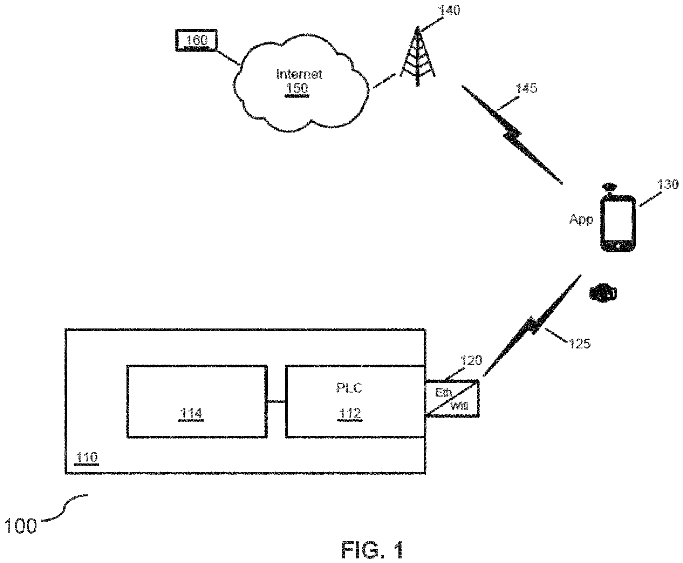

**FIG. 1** shows a system for facilitating PLC management according to an embodiment of the invention. System 100 comprises a remote machine 114 to be controlled by a PLC 112. Hereafter, for ease of understanding, reference is made to a remote machine 110 which encompasses all the components of the remote sub-system which need to be provided with wireless connectivity. Therefore, the remote machine 110 comprises the mobile machinery 114 itself, for example, agricultural machinery, and it also comprises the sensors and actuators connected to the PLC that controls some functionality of the agricultural machinery, using the sensors to receive input data and emitting output data to the actuators to perform the programmed action.

All functionalities carried out by the PLC 112 can be displayed, monitored, and programmed by a maintenance computer 160. The maintenance computer may be located in the same installations as the remote machine 110, it may be located in an office close to the latter, or it may be very far away, even in another country. The remote machine connects with the maintenance computer through a mobile electronic device 130 that has wireless connectivity. In the example of FIG. 1, the PLC machine is connected using a wireless interface 120, for example, Ethernet/WiFi, using a wireless communications protocol 125, to the mobile device 130. Given the circumstances of field work, in one aspect the wireless communications protocol is short-range (such as WiFi, Bluetooth, or similar), although in another aspect, it can also be long-range (cellular network, WiMax, or similar). For its part, the mobile device exchanges information with the maintenance computer using a communications network that can comprise the mobile cellular network cell 140 and/or the Internet 150, using another long-range communications protocol 145. One skilled in the art understands that other options are possible, such as, for example, that instead of the Internet, a particular communications network is used, or that instead of the cellular network, a combination of communication networks is used, for example, other WiFi or WiMax networks, or the like, while the connectivity is completed from the PLC to the maintenance computer.

In one aspect, the maintenance computer comprises a virtual private network server, VPN (acronym for *"Virtual Private Network"*) to establish the VPN connection between the mobile device, which acts as a VPN client, and the maintenance computer. This ensures the security and confidentiality of communications, offering a more secure solution for high-risk machinery or machinery with high economic value for the user.

The mobile device 130 may be any electronic device that has this type of connectivity, whether short- or long-range, and in addition a user interface allowing interaction therewith. Typical devices may be those known as smartphones, tablets, laptops, or similar. The mobile device 130 and the maintenance computer 160 comprise a gateway application, which carries out the double function of allowing to connect remotely and wirelessly with the PLC of the remote machine, and in addition to upload and modify the same PLC program, regardless of its manufacturer.

The gateway may be already pre-installed on the mobile device, or can be installed retrospectively on any mobile device. In this example, the gateway is a mobile application to be installed on the mobile device. Once installed, when run, the mobile application opens a communication channel with the PLC and another one with the maintenance computer. In another aspect, the gateway application can operate without necessarily being connected to the maintenance computer, namely, if the mobile device comprises the management interface, it can perform all the gateway functionalities by itself. The maintenance computer allows all or part of the operation to be carried out remotely by another technician in case this implementation is preferred.

Therefore, the solution exposed allows the wireless installation of the automaton program on any existing remote machine PLC by the PLC operator who could be in another country. This involves no complexity, as a local operator only needs a mobile device having the mobile gateway application installed. This allows providing connectivity to the PLC without needing a factory-installed router on the PLC itself specially configured for that PLC network. In addition, the bandwidth used is the generic one for the mobile device, being used only to the extent and at the times of data exchange. Therefore, hiring a data line solely for providing connectivity to a particular PLC is no longer necessary. When involving parks, or agricultural installations, comprising hundreds of industrial machines, this difference results in a very significant reduction of costs and complexity. In addition, this solution allows connecting even low-cost machines, enabling taking advantage of the possibility of programming PLCs in any type of field machine. In addition, the gateway application not only allows the exchange of data, but also the live monitoring of programs, making it possible to modify the program or reprogram it, or troubleshoot problems remotely. This functionality exists both for PLCs with factory-set programs, from the same PLC manufacturer, and for generic PLCs, whose programs are loaded, installed, and run using the mobile gateway application.

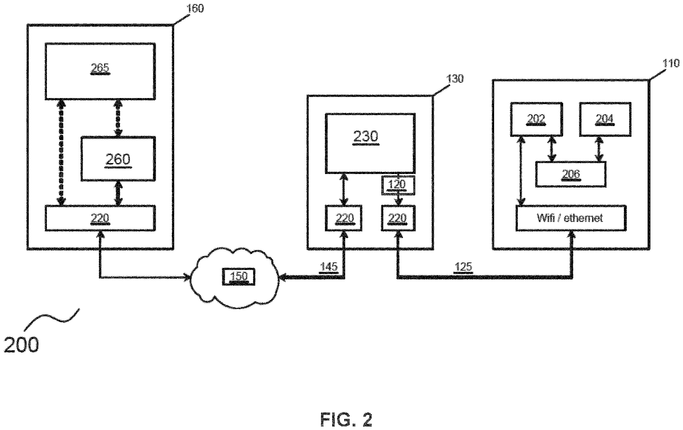

**FIG. 2** shows with greater detail the modules of the gateway application of the system to facilitate PLC management. In this case the various elements of the remote machine 110 are detailed, comprising a PLC 202, the input/output ports 204, and the communication buses 206 (for example, CAN type, from acronym for *"Controller Area Network"*)*.* The wireless module 120 connects to the remote machine 110 with the mobile device 130 via its communication module 220. In this example this communication interface operates using the TCP/IP protocol to complete communications via the Internet 150 to the maintenance computer 160 through another communication module 220. As noted, in this case the cellular network 140 has not been used, but a direct connection to the Internet has been implemented through a direct connection 145.

In this aspect, the gateway application comprises two components, or modules. The first module, the remote gateway 230 is installed on a device of the mobile device 130, which communicates with the second module, the management gateway 260, which is installed on an apparatus of the maintenance computer 160.

On the one hand the management gateway 260 implements a secure communications protocol with the remote gateway 230, if necessary, and on the other hand it acts as interface with the programming module 265, which allows the maintenance technician carrying out the remote PLC programming and monitoring functionalities. Therefore, among other functions, the management gateway carries out the functions of (i) enabling the initiation of a communications session with a remote gateway and the remote PLC, (ii) reporting on the status of the communications link between the computer and the PLC, and (iii) closing and disabling the communications session with the PLC.

In another aspect, if there is also a programming module 265 on the mobile device, the maintenance technician can carry out the PLC programming and monitoring functionalities locally, being close to the remote machine. In this regard, the maintenance computer can also be connected, or can be completely disconnected, for example, in case of failure of the connection 145 due to lack of coverage or connectivity.

The communication channel between both management and remote gateways (which in an aspect of the invention can reside in the maintenance computer and remote mobile device, respectively), can be opened as a conventional channel via the Internet, or a VPN network can be established, to give the communications greater privacy and robustness against unauthorised attacks or interventions. In the case of a VPN network, an additional problem exists in that mobile devices do not allow implementing a VPN network for exchanging PLC data between the remote gateway and management gateway while a wireless connection exists between the PLC and the mobile device. Therefore in another aspect of the invention a communications protocol intended to solve this problem is provided, enabling information flow between the PLC and the gateway application in addition to a wireless connection with the mobile device.

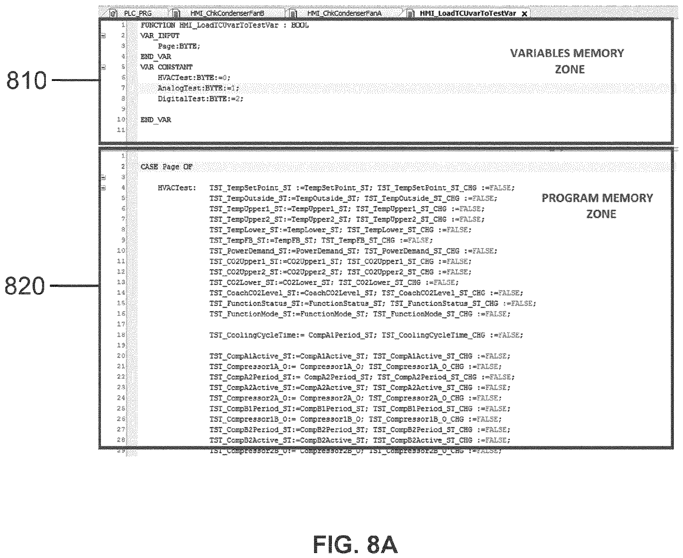

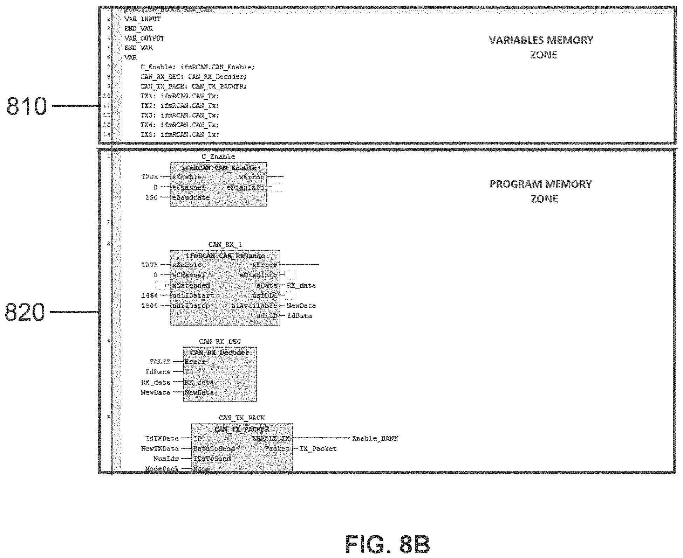

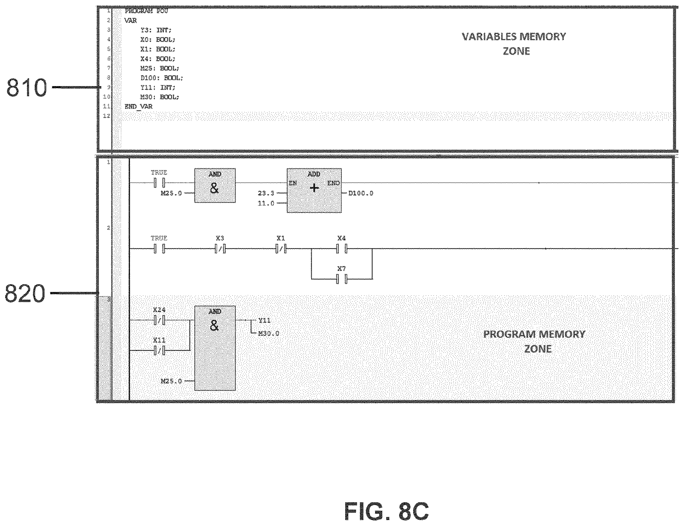

A PLC has hardware intended for the storage of the required information, which is the memory of the PLC that is of different types based on the information to be stored. **FIGs. 8A to 8C** show different configurations of PLC memories. At the functional level PLCs have two types of storage. The first type is the program memory 820 that contains the sequence of instructions to be run by the CPU sequentially and cyclically. The main requirement for this type of memory is a fast read and write access. The second type is the data memory 810, which is also known as memory data register, or variables memory, since it contains the data necessary for the purposes of running the program. It is where data such as the status of the input and output devices of the system, calculations derived from the program sequences implemented by the CPU, among others, are stored. This memory is able to save the information originating in the microprocessor.

The information of these memories are exchanged and communicated using four different types of buses. The data bus is used by the CPU to send the information to the various elements. The CPU sends the location to access the memory address desired by the address bus. The control bus is used for the exchange of signals relating to internal control actions, and the system bus is in charge of managing the communication through the internal input/output unit of the CPU and the input and output ports.

The PLC programming process involves the implementation of a sequence of instructions, whether arithmetic calculation or logical functions, to achieve that, once programmed, the desired control result is obtained. It is the process of creation of the commands to be later run by the PLC. It is normally a process performed by the programming software, which the PLC manufacturer makes available to developers and programming languages standardised by IEC 61131-3 are used. Examples of this type of programs are LD - Ladder Diagram, ST - Structured Text, or SFC - Sequential Function Chart, among others. As mentioned, the programming code is stored in the program memory, while the variables used by the program are stored in the data memory.

Once the program is installed on the remote PLC, the PLC may need to be reprogrammed, to change or modify the function to be performed by the machine. It is also necessary to be able to resolve operational problems, for example errors, or unexpected stops, effectively and quickly, to the benefit of the user of the machines and PLCs. This requires PLC monitoring and the ability to analyse and resolve any programming errors that may exist. This PLC debugging process allows, on one hand, to display the status of the variables that are used by the control program, and on the other hand, it is also the process that makes it possible to stop executing the sequence of instructions of the CPU at a particular point and execute the instructions step by step, enabling control in terms of whether the sequence programmed is the correct one and allows for the detection of faults in the programming process. Once the problem has been discovered, it also allows modifying the instructions with the aim of solving the problem so it does not happen again. As mentioned, this ability of re-programming the PLC program from the remote gateway of the mobile electronic device allows changing the PLC instructions themselves, or providing the PLC with greater functionality than before, quickly and wirelessly, to the benefit of the user.

The remote gateway comprises the necessary means to be able to carry out all the necessary functionalities to allow the maintenance computer, not only to read and write variables in the data memory of the PLC, but also to read and write the programming code of the program memory. This dual functionality allows not only establishing new time or distance thresholds to correct certain behaviour, such as the movement of the machines, but allows the full control of the PLC, modifying how these variables are to be processed, allowing complete PLC re-programming remotely and wirelessly. The writing process of the program memory implies the change of the logic of operations between the system variables.

Also advantageously, at the time of a PLC failure, and unexpected stop of the machine, this dual functionality allows an operator, remotely from the maintenance computer, to have direct access to the PLC, and using the debugging tools, finding and solving the programming problems in order to start up the machine without wasting time and with minimum inconvenience for the machine user. The possibility of carrying out these functions allows reprogramming existing PLCs with factory pre-installed programs, to provide them with greater functionality, and resolve problems with the updated programs, in case of a fault at the time of the reprogramming, without costs or wasted time for the end user of the machines. Therefore, it is possible to make changes of the sequence of instructions that the CPU runs without needing to stop running the program, this being done on-line. One of the advantages is that it is not necessary to stop the operation of the machine to make changes in the logical sequence of the program, which is very beneficial for the normal operation of the agricultural or industrial machinery. The debugging of the program is further possible with the possibility of introducing breakpoints, and this way the execution of the sequential program can be stopped at a certain point, thus being able to assess the condition of the system at a given instant.

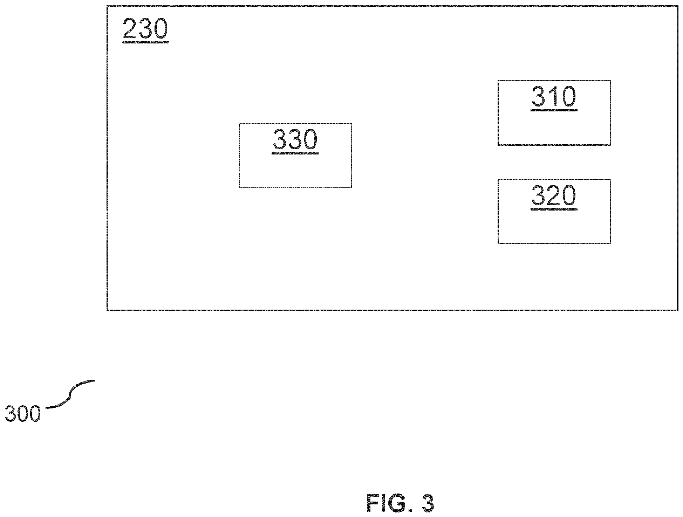

**FIG.** 3 shows the remote gateway of the mobile device according to an embodiment of the invention. The remote gateway 230 comprises PLC program memory modification means 310 and PLC data memory modification means 320. In one example, both means are connected to the corresponding PLC memories using the communication module 220. The control means 330 process this information to optimise its transmission to the management gateway. This processing may comprise compressing the information, and/or encoding it, encapsulating it in the case of implementing a tunnel through the IP network, or sending it through the VPN network, where appropriate.

Upon receiving this information, the management gateway 260 on the maintenance computer 160 performs the reverse processing (de-encapsulation, decryption, decompression, and so on), and provides the program information and the variables information to the programming module 265 to generate an accurate picture of the program and the current status of the PLC and the machine, allowing the remote user to discover the error, reprogram, and start up the system without delays. As mentioned, in another aspect, the functionality may also be carried out from the mobile device in the event of having the programming module 265 also installed thereon.

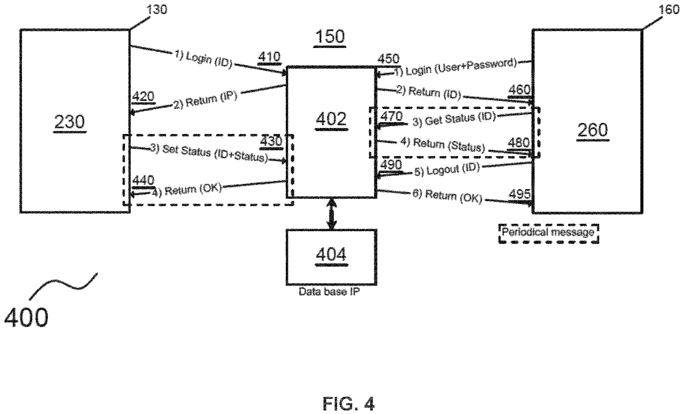

**FIG. 4** shows another aspect, in which the communication between the management gateway 260 on the maintenance computer 160, and the remote gateway 230, on the mobile device 130, are routed through a credentials server on the Internet that facilitates the processing of information coming from multiple PLCs and also allows managing the system. The credentials server includes a database 404, for example SQL, and a translator application 402 that manages HTTP requests sent from the management gateways and remote gateways. This server acts as the interface and is responsible for translating HTTP requests into commands to the database, and for translating the responses to each command in response messages to each HTTP request. This database information is in turn managed by an administrator computer, which is used to store the user data, enable connections, and monitor the status of a connection in progress. Therefore the IP addresses of the maintenance and mobile gateway devices are known in a simple and centralised manner.

The communications can be implemented securely, using credentials. The user of the maintenance computer accesses the system by entering a user name and a password through the management gateway. The management gateway sends 450 the user data and password to the server, where they are verified. Once the user name and password have been verified, the server responds 460 with an identifier (ID_GW) and updates the database associating the ID_GW and the IP address of the maintenance computer (IP_PCM) with the user. The ID_GW is a random and unique number, and cannot coincide with another ID_GW assigned in previous connections. At the time that the server generates a new ID_GW and sends it to the maintenance computer, the ID_GWs previously generated are disabled. That is to say, it is only possible to enable the connection with the last ID_GW generated by the server. The maintenance computer user communicates the new ID_GW to the user of the mobile device 130 (for example, via a phone call, SMS or e-mail), and starts up the VPN Server. The management gateway performs 470 periodic requests to the server to obtain 480 the status of the connection between the mobile device and the maintenance computer (STATUS) and displays it on the user interface of the management gateway.

The user of the mobile device enters the ID_GW on the remote gateway 230 to start the process of connecting to the maintenance computer 160. The remote gateway sends 410 the ID_GW to the server, which checks if the ID_GW exists and if there is any IP_PCM associated to the identifier. If both conditions are met, the server sends 420 the IP_PCM to the remote gateway, otherwise, it will communicate the error. Once the remote gateway receives the IP_PCM, the application starts the connection to the PLC, which may comprise a connection via WiFi and a connection to the maintenance computer via VPN. The remote gateway periodically sends 430 to the server the status of the connection between the mobile device and the maintenance computer. The server increases the number of connections made to the maintenance computer when the connection STATUS goes from disconnected VPN Client to connected VPN Client. When the management gateway displays 440 the connection status as enabled, the programming module is booted to start the PLC remote programming, debugging and monitoring process. To finish, the maintenance computer user closes 490 the connection and the server deletes the ID_GW and the IP_PCM from the table, returning a confirmation 495.

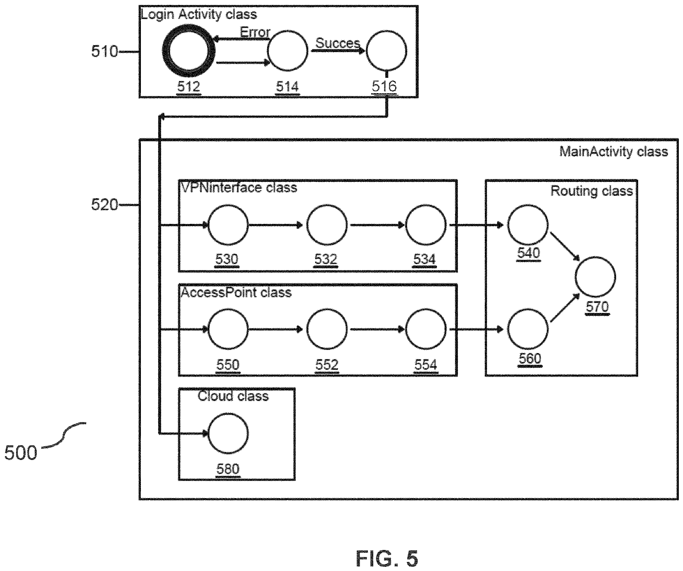

**FIG. 5** shows in more detail the remote gateway 230, which is formed by two main modules, the login means 510 and the communications management and package routing means 520. The login means make it possible to configure 512 the SSID, the password of the WiFi access point, and the PLC IP address allocation mode in DHCP mode or in static IP mode. They further incorporate a field where the user should enter the assigned identifier from the service computer to login. The identifier is then sent to the server database, where it is checked 514 if the ID is correct. If it does not exist, the database returns an error to the remote gateway. If the ID is correct, the database responds 516 with the IP address associated with the maintenance computer and executes the communications management task.

The communications management means manages the establishment of TCP/IP connections with the maintenance computer and the PLC. On one hand, it establishes the VPN communication as VPN Client (as appropriate), and for this, a new VPN connection is configured 530 and connects 532 with the VPN server on the maintenance computer. On the other hand, the communications management means activates 550 the mobile device as a WiFi access point and scans 552 users connected to the access point waiting for the PLC to connect. Once the two communication channels have been established 534, 554, the communications management means opens the ports 560, 540, TCP/IP with the PLC and with the maintenance computer, and transitions into package routing mode 570 between the two ports. In parallel, the status of the connections is periodically sent 580 to the database on the server, which responds with a confirmation if everything is correct.

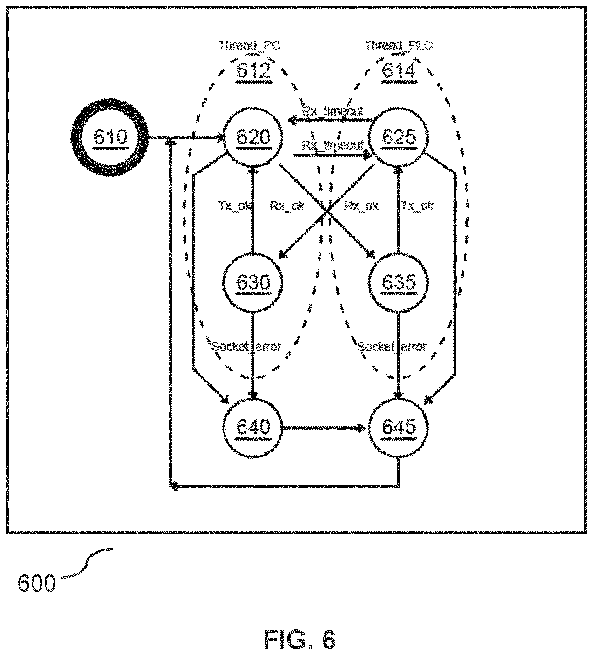

As explained, in one aspect a communications protocol is provided that enables the flow of data between the PLC and the mobile device via a VPN network while allowing a wireless connection. Advantageously, this protocol carries out the dual connectivity without decoding the data, since all the routing of the binary data is carried out in an agile and fast way. **FIG. 6** shows the status of TCP/IP package routing of the remote gateway 230 according to this protocol. With regarding to the package routing, the remote gateway executes two threads in parallel, the first thread 612, in charge of receiving and sending packages to the maintenance computer, and the second thread 614, in charge of receiving and sending packages to the PLC. The routing application consists of four statuses. A first status 620 of receiving TCP/IP packages coming from the maintenance computer. A second status 635 of sending TCP/IP packages to the PLC. A third status 625 of receiving TCP/IP packages coming from the PLC. A fourth status of sending 630 the TCP/IP packages to the maintenance computer. Depending on the case, the port opens 640 to send packages to the maintenance computer, or the port opens 645 to send packages to the PLC.

The application boots in the first status (PC package reception) and if it receives a package that comes from the computer, it passes to the second status 635. If after a time it does not receive a package from the computer, it then passes to the third status 625. In the second status, the application relays to the PLC the message received in the first status and passes it to the first status. In the third status (PLC package reception), if it receives a package coming from the PLC, it passes to the fourth status 630. If after a time it does not receive a package, it then passes to the first status. In the fourth status, it relays to the maintenance computer the package received from the PLC in the third status, and passes it to the first status.

**FIG. 2** shows the status of the remote gateway connections. The user can observe the mobile device connections status through a series of indicators:
- *"AP status"*: indicates if the mobile device has enabled the AP WiFi access point.
- *"Connected to PLC"*: indicates if the PLC and the mobile device are connected.
- *"Establish VPN"*: indicates whether the VPN is successfully established between the mobile device (VPN client) and the maintenance computer (VPN server).
- *"Connected to PC"*: indicates if the mobile device and the maintenance computer are connected.
- *"Codesys connected"*: indicates whether the maintenance computer is monitoring the PLC through the program, in this case named Codesys.

Therefore, the inventors have developed different aspects implemented as a gateway application comprising a remote gateway module provided on a mobile device to communicate with the PLC coupled to a machine to be controlled. It may also comprise a management gateway module provided on a maintenance computer to communicate with the mobile device and with the PLC. The applications allow the operator who is at the installations where the PLCs are located to establish a connection without the need of a specific router, in a simple and fast manner, with the connection of a simple WiFi adapter (if the PLC needs one). The use of the mobile device in the case of the invention allows for multiple possibilities and does not restrict the costs associated with the data transmission to only a single connection of a single machine. In addition, being an open system, it permits the use of the PLC manufacturer's own software for programming the equipment, without being unnecessarily restricted by the PLC manufacturer's limited firmware. Very advantageously, the applications of the invention allow access to the program memory of a PLC so they are able to change both the logic and the sequence of the basic operating instructions that have been programmed on the PLC, regardless of the programming language. This functionality is in addition to allowing access to the data memory or log tables to check the status of program variables. Therefore, PLC programming is possible using the standard programming languages.

In addition, the skilled person in the art would understand that the various embodiments can be implemented in hardware, software, firmware, middleware, micro code, or any combination thereof. Various aspects or characteristics described can be implemented, on the one hand, as a method or procedure or function, and on the other hand, as an apparatus, device, system, or computer program accessible by any computer-readable device, carrier or medium. The procedures or algorithms described may be implemented directly in hardware, in a software module executed by a processor, or a combination of the two. The various media may comprise software modules resident in RAM memory, flash memory, ROM, EPROM, EEPROM, registers, hard disk, removable disk, a CD-ROM, or any other type of storage medium known in the art.

The various means may comprise logic blocks, modules, and circuits can be implemented or carried out by a general purpose processor, a digital signal processor (DSP), an application specific integrated circuit (ASIC), a field-programmable gate array (FPGA), or other programmable logic devices, discrete gate or transistor logic, discrete components of hardware, or any combination thereof designed to perform the functions described. A general purpose processor may be a microprocessor, but in the alternative, the processor may be a conventional processor, controller, microcontroller, state machine, or embedded processor.

The various media may include computer-readable media including, but not limited to, magnetic storage devices (e.g. hard disks, floppy disks, magnetic strips, and others), optical disks (e.g., compact discs, CD or versatile DVD, and others), smart cards, and temporary flash storage drives (for example EPROM). In addition, the variety of storage media described above may represent one or more devices and/or computer-readable media to store information. The term computer-readable medium may comprise, without being limited thereto, a variety of media able to store, save, or transport instructions and/or data. Additionally, a computer program product may include a computer-readable medium with one or more instructions or operating codes to make a computer perform the functions described once executed on the computer.

What has been described comprises several embodiments by way of example. As it is not possible or feasible to describe in detail all the variety of combinations and permutations of the inventive concept which would give rise to a large number of embodiments, the drafter understands that one skilled in the would derive, after a direct and objective reading of this disclosure, the various permutations and combinations possible, without departing from the general inventive concept described. Therefore, the main embodiments have been described, it being understood that they comprise other combinations, variations, and modifications.

In the following certain additional aspects or examples are described:
A remote apparatus in a mobile electronic device for facilitating the remote management of a programmable logic controller, PLC, of at least one machine to be controlled, the remote apparatus comprising: means for exchanging data with a programmable logic controller, PLC, by means of a wireless communications protocol of the mobile electronic device; and remote gateway means configured for accessing the PLC allowing the modification of the PLC program. The apparatus, wherein the remote gateway means is configured to access the data memory of the PLC enabling the reading of variables. The apparatus, wherein remote gateway means is configured to access the program memory of the PLC enabling the modification of the program instructions. The apparatus, wherein the remote gateway means is configured to insert breakpoints in the program to facilitate troubleshooting. The apparatus, further comprising means for exchanging data with a maintenance computer by means of a wireless communications protocol of the mobile electronic device. The apparatus, wherein the remote gateway means further comprises session initiation means and communications management means to establish and close connections, and to report on the status of the communications. The apparatus, wherein the remote gateway means comprises control means for processing the data to be sent or received, comprising compression or decompression, encoding or decoding, encapsulation or de-encapsulation, modulation, or demodulation. An apparatus, wherein the wireless communications protocol can be short-range, such as for example, WiFi or Bluetooth, or it can be long-range, such as for example, from a cellular network or WiMax.

A management apparatus in a maintenance computer for the remote management of a programmable logic controller, PLC, of at least one machine to be controlled, the management apparatus comprising: means for exchanging data with a mobile electronic device; and means for gateway management configured for processing the data exchanged with the mobile electronic device enabling the modification of the PLC program. The apparatus, wherein the management means further comprises session initiation means and communications management means to establish and close connections, and to report on the status of the communications. The apparatus, wherein the management means comprises control means for processing the data to be sent or received, comprising compression or decompression, encoding or decoding, encapsulation or de-encapsulation, modulation, or demodulation. The apparatus, wherein the management means comprises means for establishing a virtual private network, VPN, between the management apparatus and the remote apparatus.

A method in a remote apparatus of a mobile electronic device for facilitating the remote management of a programmable logic controller, PLC, of at least one machine to be controlled, the method comprising: exchanging data with a programmable logic controller, PLC, by means of a wireless communications protocol; and accessing the program memory of the PLC enabling the modification of the program instructions. The method, wherein accessing the program memory of the PLC comprises accessing the data memory of the PLC enabling the reading of variables. The method, wherein accessing the program memory of the PLC comprises accessing the program memory of the PLC enabling the modification of the program instructions. The method, wherein the modification of the program instructions comprises introducing breakpoints in the program to facilitate troubleshooting. The method, further comprising exchanging data with a maintenance computer by means of a wireless communications protocol of the mobile electronic device. The method, further comprising session initiation and communications management to establish and close connections, and to report on the status of the communications. The method, further comprising processing the data to be sent or received, comprising compression or decompression, encoding or decoding, encapsulation or de-encapsulation, modulation, or demodulation. The method, wherein the wireless communications protocol can be short-range, such as for example, WiFi or Bluetooth, or it can be long-range, such as for example, from cellular network or WiMax.

A method in a management apparatus of a maintenance computer for facilitating the remote management of a programmable logic controller, PLC, of at least one machine to be controlled, the method comprising: exchanging data with a mobile electronic device; and processing the exchanged data enabling the modification of the program instructions of the PLC. The method, further comprising session initiation and communications management to establish and close connections, and to report on the status of the communications. The method, further comprising processing the data to be sent or received, comprising compression or decompression, encoding or decoding, encapsulation or de-encapsulation, modulation, or demodulation. The method, further comprising the establishment of a virtual private network, VPN, between the management apparatus and the remote apparatus.

A system for the remote management of programmable logic controllers, PLC, wherein the system comprises at least one PLC of at least one machine to be controlled, and at least one mobile electronic device connected to the at least one PLC, wherein the at least one mobile electronic device comprises a remote apparatus. The system, further comprising at least one maintenance computer connected to the PLC via the at least one mobile electronic device, wherein the at least one maintenance computer comprises a management apparatus. The system, further comprising a credentials server for authenticating the user of the mobile electronic device.

A method for the remote management of programmable logic controllers, PLC, in a system comprising at least one PLC of at least one machine to be controlled, and at least one mobile electronic device connected to the at least one PLC, wherein the method performed by the at least one mobile electronic device. The method, further comprising at least one maintenance computer connected to the PLC via the at least one mobile electronic device, wherein the method performed by the at least one maintenance computer. The method, further comprising authenticating the user of the mobile electronic device.

A computer program comprising instructions, once executed by a processor in a mobile electronic device, for performing a method.

A computer program comprising instructions, once executed by a processor in a maintenance computer, for performing a method.

A computer-readable medium that comprises instructions, once executed by a processor in a mobile electronic device, for performing a method.

A computer-readable medium comprising instructions, once executed by a processor on a maintenance computer, for performing a method.

## Claims

1. A remote apparatus in a mobile electronic device for facilitating the remote management of a programmable logic controller, PLC, of at least one machine to be controlled, the remote apparatus comprising:
means for exchanging data with a programmable logic controller, PLC, by means of a wireless communications protocol of the mobile electronic device; and
remote gateway means configured for accessing the PLC allowing the modification of the PLC program.

2. The apparatus of claim 1, wherein the remote gateway means is configured to access the data memory of the PLC enabling the reading of variables.

3. The apparatus of claim 2, wherein remote gateway means is configured to access the program memory of the PLC enabling the modification of the program instructions.

4. The apparatus of claim 3, wherein the remote gateway means is configured to insert breakpoints in the program to facilitate troubleshooting.

5. The apparatus of claim 2, further comprising means for exchanging data with a maintenance computer by means of a wireless communications protocol of the mobile electronic device.

6. The apparatus of claim 5, wherein the remote gateway means further comprises session initiation means and communications management means to establish and close connections, and to report on the status of the communications.

7. The apparatus of claim 5, wherein the remote gateway means comprises control means for processing the data to be sent or received, comprising compression or decompression, encoding or decoding, encapsulation or de-encapsulation, modulation, or demodulation.

8. An apparatus according to any of the preceding claims, wherein the wireless communications protocol can be short-range, such as for example, WiFi or Bluetooth, or it can be long-range, such as for example, from a cellular network or WiMax.

9. A management apparatus in a maintenance computer for the remote management of a programmable logic controller, PLC, of at least one machine to be controlled, the management apparatus comprising:
means for exchanging data with a mobile electronic device; and
means for gateway management configured for processing the data exchanged with the mobile electronic device enabling the modification of the PLC program.

10. The apparatus of claim 9, wherein the management means further comprises session initiation means and communications management means to establish and close connections, and to report on the status of the communications.

11. The apparatus of claim 9, wherein the management means comprises control means for processing the data to be sent or received, comprising compression or decompression, encoding or decoding, encapsulation or de-encapsulation, modulation, or demodulation.

12. The apparatus of claim 9, wherein the management means comprises means for establishing a virtual private network, VPN, between the management apparatus and the remote apparatus.

13. A method in a remote apparatus of a mobile electronic device for facilitating the remote management of a programmable logic controller, PLC, of at least one machine to be controlled, the method comprising:
exchanging data with a programmable logic controller, PLC, by means of a wireless communications protocol; and
accessing the program memory of the PLC enabling the modification of the program instructions.

14. The method of claim 13, wherein accessing the program memory of the PLC comprises accessing the data memory of the PLC enabling the reading of variables.

15. The method of claim 14, wherein accessing the program memory of the PLC comprises accessing the program memory of the PLC enabling the modification of the program instructions.

16. The method of claim 15, wherein the modification of the program instructions comprises introducing breakpoints in the program to facilitate troubleshooting.

17. The method of claim 14, further comprising exchanging data with a maintenance computer by means of a wireless communications protocol of the mobile electronic device.

18. The method of claim 17, further comprising session initiation and communications management to establish and close connections, and to report on the status of the communications.

19. The method of claim 17, further comprising processing the data to be sent or received, comprising compression or decompression, encoding or decoding, encapsulation or de-encapsulation, modulation, or demodulation.

20. The method according to any of the preceding claims, wherein the wireless communications protocol can be short-range, such as for example, WiFi or Bluetooth, or it can be long-range, such as for example, from cellular network or WiMax.

21. A method in a management apparatus of a maintenance computer for facilitating the remote management of a programmable logic controller, PLC, of at least one machine to be controlled, the method comprising:
exchanging data with a mobile electronic device; and
processing the exchanged data enabling the modification of the program instructions of the PLC.

22. The method of claim 21, further comprising session initiation and communications management to establish and close connections, and to report on the status of the communications.

23. The method of claim 21, further comprising processing the data to be sent or received, comprising compression or decompression, encoding or decoding, encapsulation or de-encapsulation, modulation, or demodulation.

24. The method of claim 21, further comprising the establishment of a virtual private network, VPN, between the management apparatus and the remote apparatus.

25. A system for the remote management of programmable logic controllers, PLC, wherein the system comprises at least one PLC of at least one machine to be controlled, and at least one mobile electronic device connected to the at least one PLC, wherein the at least one mobile electronic device comprises a remote apparatus according to any of claims 1 to 8.

26. The system of claim 25, further comprising at least one maintenance computer connected to the PLC via the at least one mobile electronic device, wherein the at least one maintenance computer comprises a management apparatus according to any of claims 9 to 12.

27. The system of claim 25, further comprising a credentials server for authenticating the user of the mobile electronic device.

28. A method for the remote management of programmable logic controllers, PLC, in a system comprising at least one PLC of at least one machine to be controlled, and at least one mobile electronic device connected to the at least one PLC, wherein the method performed by the at least one mobile electronic device is according to any of claims 13 to 20.

29. The method of claim 28, further comprising at least one maintenance computer connected to the PLC via the at least one mobile electronic device, wherein the method performed by the at least one maintenance computer is according to any of claims 21 to 24.

30. The method of claim 28, further comprising authenticating the user of the mobile electronic device.

31. A computer program comprising instructions, once executed by a processor in a mobile electronic device, for performing a method according to any of claims 13 to 20.

32. A computer program comprising instructions, once executed by a processor in a maintenance computer, for performing a method according to any of claims 21 to 24.

33. A computer-readable medium that comprises instructions, once executed by a processor in a mobile electronic device, for performing a method according to any of claims 13 to 20.

34. A computer-readable medium comprising instructions, once executed by a processor on a maintenance computer, for performing a method according to any of claims 21 to 24.
